# EUROPÄISCHE PATENTSCHRIFT

(11) **EP 3 820 733 B1**
(45) Veröffentlichungstag und Bekanntmachung des Hinweises auf die Patenterteilung: **06.09.2023**
(21) Anmeldenummer: 19739259.0
(22) Anmeldetag: 09.07.2019
(51) Int. Cl.: B60L 58/20

(54) **MEHRSPANNUNGSBATTERIEVORRICHTUNG UND BORDNETZ FÜR EIN KRAFTFAHRZEUG**
MULTI-VOLTAGE BATTERY DEVICE AND ELECTRICAL SYSTEM FOR A MOTOR VEHICLE
DISPOSITIF DE BATTERIE MULTI-TENSION ET RÉSEAU DE BORD POUR UN VÉHICULE AUTOMOBILE

(30) Priorität: 12.07.2018 DE 102018211582
(43) Veröffentlichungstag der Anmeldung: 19.05.2021
(73) Patentinhaber: Vitesco Technologies GmbH, 93055 Regensburg (DE)
(72) Erfinder: ASCHENBRENNER, Tobias, 81737 München (DE); LAUER, Stefan, 81737 München (DE)
(74) Vertreter: Vitesco Technologies
(86) Internationale Anmeldenummer: PCT/EP2019/068451
(87) Internationale Veröffentlichungsnummer: WO 2020/011806

(56) Entgegenhaltungen:
- EP-A1- 2 688 179
- EP-A2- 1 777 794
- DE-A1- 10 361 743
- DE-A1-102012 017 674
- DE-A1-102015 219 589
- DE-A1-102016 215 559
- DE-B3- 10 258 894

## Beschreibung

### Technisches Gebiet:

Die vorliegende Erfindung betrifft eine Mehrspannungsbatterievorrichtung und ein Bordnetz für ein Kraftfahrzeug, insb. ein Hybridelektro-/Elektrofahrzeug, mit einer Mehrspannungsbatterievorrichtung.

### Stand der Technik und Aufgabe der Erfindung:

Mehrspannungsbatterievorrichtungen zum Bereitstellen von verschiedenen Nenn- bzw. Betriebsspannungen für Bordnetze von Kraftfahrzeugen, insb. Hybridelektro-/Elektrofahrzeugen, sind bekannt.

Durch diverse interne oder externe Einflüsse besteht bei den Bordnetzen die Gefahr überhöhter (Bordnetz-)Ströme, insb. infolge elektrischer Kurzschlüsse in Bordnetzen, wodurch die Mehrspannungsbatterievorrichtungen belastet werden, was wiederum zu Beschädigung in Batteriezellen der Mehrspannungsbatterievorrichtungen führen kann.

Die Druckschrift DE 103 61 743 A1 beschreibt eine Vorrichtung, die eingerichtet ist, eine Batterie in einem Zweispannungsbordnetz eines Fahrzeuges zwischen einer üblichen Bordnetzspannung und einem Starterkreis mit höherer Spannung umzuschalten.

Die Druckschrift EP 2 688 179 A1 beschreibt ein Lade-/Entlademanagement, mit dem eine Vielzahl von Sekundärbatterien effizient in kurzer Zeit aufgeladen werden kann.

Die Druckschrift DE 102 58 894 B3 beschreibt eine Energieversorgungseinheit für ein Bordnetz von Fahrzeugen mit einem Generator und mindestens zwei separaten, von dem Generator mit Gleichstromwandlern gespeisten Akkumulatoreinheiten.

Die Druckschrift EP 1 777 794 A2 beschreibt eine Batterie, die mittels einer Schutzschaltung vor bspw. Kurzschlussströmen geschützt wird. Die Schutzschaltung weist einen Schutzschalter und eine Schmelzsicherung auf, die zueinander in Serie geschaltet sind.

Die Druckschrift DE 10 2012 017674 A1 beschreibt ein Kraftfahrzeug mit einem Bordnetz, welches ein einen ersten elektrischen Energiespeicher aufweisendes Niedrigspannungsnetz mit einer ersten Spannung und ein einen zweiten elektrischen Energiespeicher aufweisendes Hochspannungsnetz mit einer zweiten Spannung aufweist. Dabei ist die zweite Spannung höher als die erste Spannung.

Die Druckschrift DE 10 2015 219589 A1 beschreibt eine Fahrzeugbatterievorrichtung. Die Vorrichtung weist einen ersten Akkumulator mit einem Zwischenabgriff auf. Die Vorrichtung weist ferner einen zweiten Akkumulator auf, der einen Pluspol aufweist, welcher mit dem Zwischenabgriff des ersten Akkumulators verbunden ist. Dabei weist der zweite Akkumulator eine Nennspannung auf, die kleiner als die Nennspannung des ersten Akkumulators ist. Die Vorrichtung weist zudem einen ersten positiven Anschluss und einen zweiten positiven Anschluss auf, wobei der erste positive Anschluss mit einem Pluspol des ersten Akkumulators verbunden ist und der zweite positive Anschluss mit dem Pluspol des zweiten Akkumulators verbunden ist. Die Vorrichtung weist ferner einen Masseanschluss auf, der über einen ersten Schalter mit einem Minuspol des ersten Akkumulators und über einen zweiten Schalter mit einem Minuspol des zweiten Akkumulators verbunden ist.

Die Druckschrift DE 102016215559 A1 beschreibt eine gattungsgemäße Mehrspannungsbatterievorrichtung für ein Kraftfahrzeug.

Bei den Mehrspannungsbatterievorrichtungen mit zwei oder mehr Batteriezellengruppen bleibt eine der Batteriezellengruppen auch während eines Ruhemodus, in dem das Fahrzeug (nach Ende eines Fahrbetriebs) abgestellt ist und nur sicherheitsrelevante und sonstige relevante Funktionen des Fahrzeugs durchgeführt werden, mit dem Rest des Bordnetzes elektrisch verbunden, um die relevanten Funktionen weiterhin aufrechterhalten zu können. Damit ist diese Batteriezellengruppe besonders gefährdet durch überhöhte Ströme, insb. elektrische Kurzschlüsse, im Bordnetz. Damit besteht die Aufgabe der Erfindung darin, eine Möglichkeit bereitzustellen, mit der die Mehrspannungsbatterievorrichtungen und somit auch Bordnetze vor Beschädigung durch überhöhte (Bordnetz-)Ströme zuverlässig zu schützen.

Beschreibung der Erfindung:
Diese Aufgabe wird durch den Gegenstand des unabhängigen Anspruchs gelöst. Vorteilhafte Ausgestaltungen sind Gegenstand der Unteransprüche.

Gemäß einem ersten Aspekt der Erfindung wird eine Mehrspannungsbatterievorrichtung für ein Kraftfahrzeug, insb. ein Hybridelektro-/Elektrofahrzeug, bereitgestellt.

Die Mehrspannungsbatterievorrichtung umfasst einen ersten Ausgangsstromanschluss und einen Massestromanschluss zum Bereitstellen einer ersten Nennspannung, bspw. einer ersten Bordnetzspannung für ein Bordnetz des Kraftfahrzeugs.

Die Mehrspannungsbatterievorrichtung umfasst ferner einen zweiten Ausgangsstromanschluss, der mit dem Massestromanschluss zum Bereitstellen einer zweiten Nennspannung, bspw. einer zweiten Bordnetzspannung für das Bordnetz, dient.

Die Mehrspannungsbatterievorrichtung umfasst ferner eine erste Serienschaltung von einer ersten Batteriezellengruppe und einem ersten steuerbaren Schalter, die zwischen dem ersten Ausgangsstromanschluss und dem Massestromanschluss elektrisch angeschlossen ist. Dabei ist der erste Schalter über dessen zwei Anschlüsse in der ersten Serienschaltung elektrisch angeschlossen.

Die Mehrspannungsbatterievorrichtung umfasst ferner einen Schutzwiderstand, der zwischen den beiden Anschlüssen des ersten Schalters und somit parallel zu dem ersten Schalter elektrisch angeschlossen ist. Der erste Schalter ist eingerichtet, in einem geschlossenen Schaltzustand dessen beiden Anschlüsse miteinander elektrisch kurzzuschließen und somit den Schutzwiderstand zu überbrücken.

Die Mehrspannungsbatterievorrichtung umfasst zudem eine zweite Batteriezellengruppe, die zwischen dem zweiten Ausgangsstromanschluss und dem ersten Ausgangsstromanschluss elektrisch angeschlossen ist und mit der ersten Batteriezellengruppe schaltbar in Serie angeschlossen ist.

Die Mehrspannungsbatterievorrichtung umfasst außerdem eine Batteriemanagementanordnung zum Betreiben der Mehrspannungsbatterievorrichtung. Die Batteriemanagementanordnung ist eingerichtet, im Falle eines zu hohen Stromes oder eines elektrischen Kurzschlusses zwischen dem ersten Ausgangsstromanschluss und dem Massestromanschluss zum Schutz der ersten Batteriezellengruppe und somit der Mehrspannungsbatterievorrichtung vor einer Überlastung durch einen zu hohen Entladestrom den ersten Schalter in einen offenen Schaltzustand zu schalten.

Um die (erste) Batteriezellengruppe und somit auch die Mehrspannungsbatterievorrichtung vor Störungen durch überhöhte Ströme bzw. elektrische Kurzschlüsse im Bordnetz zu schützen, wurde die Mehrspannungsbatterievorrichtung im Rahmen der Erfindung wie zuvor beschrieben weiterentwickelt.

Dabei ist der erste Schalter vorgesehen, der die (erste) Batteriezellengruppe wählweise (in einem geschlossenen Schaltzustand) direkt oder (in dem offenen Schaltzustand) über einen Schutzwiderstand mit dem Rest des Bordnetzes elektrisch verbindet. Der Schutzwiderstand dient als Überstromschutz und begrenzt den Entladestrom der (ersten) Batteriezellengruppe bei einem überhöhten Strom oder einem elektrischen Kurzschluss im Bordnetz.

Die Steuerung des ersten Schalters erfolgt dabei von einer Batteriemanagementanordnung, die im Falle eines überhöhten Stromes oder eines elektrischen Kurzschlusses im Bordnetz den ersten Schalter in den offenen Schaltzustand schaltet und somit die (erste) Batteriezellengruppe über den Schutzwiderstand mit dem Bordnetz elektrisch verbindet. Als Überstromschutz begrenzt der Schutzwiderstand dann den Entladestrom der (ersten) Batteriezellengruppe und schützt somit diese vor einer Überlastung durch einen überhöhten Entladestrom.

Der überhöhte Strom oder der elektrischen Kurzschluss kann bspw. von einer allgemein bekannten, am Bordnetz angeschlossenen Strommesseinheit, wie z. B. einem Hallsensor, erfasst werden, die mit der Batteriemanagementanordnung signaltechnisch in Verbindung steht und bei Vorliegen eines überhöhten Stromes oder eines elektrischen Kurzschlusses ein entsprechendes Datensignal an die Batteriemanagementanordnung abgibt.

Im Falle, dass im Bordnetz kein überhöhter Strom fließt und somit auch kein elektrischer Kurzschluss vorliegt, schaltet die Batteriemanagementanordnung den ersten Schalter in den geschlossenen Schaltzustand und überbrückt somit den Schutzwiderstand. Dadurch wird unnötiger Leistungsverlust durch den Schutzwiderstand vermieden.

Die Mehrspannungsbatterievorrichtung umfasst ferner einen zweiten Schalter, der zwischen den beiden Anschlüssen des ersten Schalters und in Serie zu dem Schutzwiderstand elektrisch angeschlossen ist. Dabei ist die Batteriemanagementanordnung bspw. ferner eingerichtet, im Falle des überhöhten Stromes oder des elektrischen Kurzschlusses zwischen dem ersten Ausgangsstromanschluss und dem Massestromanschluss den zweiten Schalter in einen geschlossenen Schaltzustand zu schalten und somit einen begrenzten Stromfluss über den Schutzwiderstand zu ermöglichen.

Die Batteriemanagementanordnung ist ferner eingerichtet, im Falle, dass das Kraftfahrzeug in einem Ruhemodus befindet, den ersten Schalter in den offenen Schaltzustand zu schalten, und somit den Entladestrom der ersten Batteriezellengruppe über den Schutzwiderstand zu begrenzen. Dadurch wird die erste Batteriezellengruppe vor einer möglichen Überlastung durch einen zu hohen Entladestrom geschützt. Ist der zuvor beschriebene zweite Schalter vorhanden, so ist die Batteriemanagementanordnung ferner eingerichtet, den zweiten Schalter in den geschlossenen Schaltzustand zu schalten und somit den begrenzten Stromfluss über den Schutzwiderstand zu ermöglichen.

Ein Ruhemodus des Kraftfahrzeugs ist ein Zustand, bei dem das Kraftfahrzeug sich nicht im Fahrbetrieb oder in einem sonstigen aktiven Betrieb befindet. Das Kraftfahrzeug wechselt in den Ruhemodus, wenn bspw. der Fahrzeugantrieb abgeschaltet und der Zündschlüssel aus dem Zündschloss gezogen wird. In diesem Ruhemodus werden in der Regel nur sicherheitsrelevante und sonstige vergleichbare Funktionen weiter aufrechtzuerhalten, was nur eine minimale Stromversorgung beansprucht.

Damit ist eine Möglichkeit bereitgestellt, mit der eine Mehrspannungsbatterievorrichtung und somit auch ein Bordnetz vor Beschädigung durch überhöhte (Bordnetz-)Ströme zuverlässig geschützt werden können.

Bspw. ist die Batteriemanagementanordnung ferner eingerichtet, im Falle einer internen Störung oder eines internen elektrischen Kurzschlusses in der ersten Batteriezellengruppe den ersten und den zweiten Schalter in den offenen Schaltzustand zu schalten. In diesem offenen Schaltzustand trennen der erste und der zweite Schalter die erste Batteriezellengruppe vom Rest des Bordnetzes elektrisch. Folglich wird das Bordnetz vor einer möglichen Beschädigung durch einen elektrischen Kurzschluss in der ersten Batteriezellengruppe geschützt.

Bspw. ist die Batteriemanagementanordnung ferner eingerichtet, bei einem kritischen Ladezustand der ersten Batteriezellengruppe den ersten und den zweiten Schalter in den offenen Schaltzustand zu schalten. Dadurch wird der Stromfluss von der ersten Batteriezellengruppe zu dem Rest des Bordnetzes unterbrochen und die erste Batteriezellengruppe vor einer Tiefentladung geschützt. Bspw. ist die Batteriemanagementanordnung über Versorgungsstromanschlüsse zwischen dem ersten Ausgangsstromanschluss und dem Massestromanschluss, und somit parallel zur ersten Serienschaltung elektrisch angeschlossen. Über diese Versorgungsstromanschlüsse wird die Batteriemanagementanordnung mit Strom versorgt.

Bspw. ist der Schutzwiderstand als ein PTC-Widerstand (Kaltleiter, auf Englisch "Positive Temperature Coefficient Thermistor") ausgebildet.

Bspw. umfasst die Mehrspannungsbatterievorrichtung ferner einen uni- oder bidirektionalen Gleichspannungswandler, der eingangsspannungsseitig zwischen dem ersten Ausgangsstromanschluss und der ersten Batteriezellengruppe und ausgangsspannungsseitig zwischen dem zweiten Ausgangsstromanschluss und der zweiten Batteriezellengruppe elektrisch angeschlossen ist. Der Gleichspannungswandler ist eingerichtet, je nach Bedarf bzw. je nach Ladezuständen der beiden Batteriezellengruppen, mit Strom der ersten Batteriezellengruppe die zweite Batteriezellengruppe und/oder mit Strom der zweiten Batteriezellengruppe die erste Batteriezellengruppe aufzuladen. Die Batteriemanagementanordnung ist bspw. ferner eingerichtet, (bei Bedarf) den Gleichspannungswandler zum Aufladen der ersten Batteriezellengruppe mit dem Strom der zweiten Batteriezellengruppe und/oder zum Aufladen der zweiten Batteriezellengruppe mit dem Strom der ersten Batteriezellengruppe zu betreiben.

Bspw. umfasst die Mehrspannungsbatterievorrichtung ferner eine zweite Serienschaltung von einem dritten, steuerbaren Schalter und der zweiten Batteriezellengruppe, die zwischen dem zweiten Ausgangsstromanschluss und dem ersten Ausgangsstromanschluss elektrisch angeschlossen ist. Dabei verbindet der dritte Schalter die zweite Batteriezellengruppe mit der ersten Batteriezellengruppe schaltbar elektrisch.

Bspw. weisen die erste und die zweite Serienschaltung einen gemeinsamen Schaltungsabschnitt auf, der den ersten Schaltanschluss mit der ersten und der zweiten Batteriezellengruppe elektrisch verbindet. Der erste Schalter bzw. dessen beide Anschlüsse sind dann in diesem gemeinsamen Schaltungsabschnitt elektrisch angeschlossen.

Bspw. sind der zuvor beschriebene erste, zweite und/oder dritte Schalter jeweils als ein Relais ausgebildet.

Der kritische Ladezustand der ersten und/oder der zweiten Batteriezellengruppe liegt bspw. bei unter 30%, 20%, 15%, 10%, 8%, 5% oder 3%. Dabei hängt der kritische Ladezustand unter andrem insb. von verwendeten Materialien bzw. Zellenchemie sowie von Zellentemperaturen und sonstige physikalischen Zuständen der Batteriezellen der ersten bzw. der zweiten Batteriezellengruppe ab.

Bspw. liegen die erste Nennspannung bei 12 Volt und/oder die zweite Nennspannung bei 48 Volt.

Gemäß einem weiteren Aspekt der Erfindung wird ein Bordnetz für ein Kraftfahrzeug, insb. ein Hybridelektro-/Elektrofahrzeug, bereitgestellt.

Das Bordnetz umfasst einen ersten Bordnetzzweig mit einer ersten Bordnetzspannung und einen zweiten Bordnetzzweig mit einer zweiten Bordnetzspannung. Das Bordnetz umfasst ferner eine zuvor beschriebene Mehrspannungsbatterievorrichtung, die über den ersten Ausgangsstromanschluss (und den Massestromanschluss) am ersten Bordnetzzweig und über den zweiten Ausgangsstromanschluss (und den Massestromanschluss) am zweiten Bordnetzzweig elektrisch angeschlossen ist.

Vorteilhafte Ausgestaltungen der oben beschriebenen Mehrspannungsbatterievorrichtung sind, soweit im Übrigen, auf das oben genannte Bordnetz übertragbar, auch als vorteilhafte Ausgestaltungen des Bordnetzes anzusehen.

### Kurze Beschreibung der Zeichnungen:

Im Folgenden werden beispielhafte Ausführungsformen der Erfindung Bezug nehmend auf die beiliegenden Zeichnungen näher erläutert. Dabei zeigen:
- Figur 1: in einer schematischen Darstellung ein Bordnetz eines Hybridelektrofahrzeugs mit einer Mehrspannungsbatterievorrichtung gemäß einer beispielhaften Ausführungsform der Erfindung; und
- Figur 2: in einer weiteren schematischen Darstellung ein weiteres Bordnetz eines Hybridelektrofahrzeugs mit einer weiteren Mehrspannungsbatterievorrichtung gemäß einer weiteren beispielhaften Ausführungsform der Erfindung.

### Detaillierte Beschreibung der Zeichnungen:

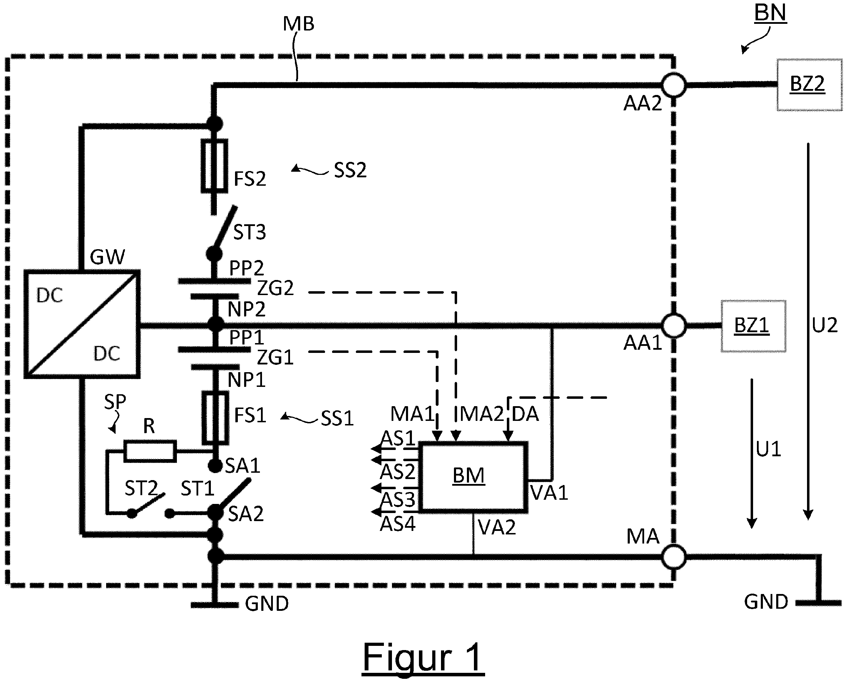

Das Bordnetz BN in Figur 1 umfasst einen ersten Bordnetzzweig BZ1, in dem eine erste Bordnetzspannung U1 in Höhe von bspw. 12 Volt vorliegt. Das Bordnetz BN umfasst ferner einen zweiten Bordnetzzweig BZ2, in dem eine zweite Bordnetzspannung U2 in Höhe von bspw. 48 Volt vorliegt. Das Bordnetz BN ist bspw. in einem Hybridelektrofahrzeug mit einem 48 Volt Mildhybrid-Antrieb verbaut.

Das Bordnetz BN umfasst außerdem eine Mehrspannungsbatterievorrichtung MB zum Bereitstellen bzw. zum Aufrechterhalten der beiden Bordnetzspannungen U1, U2.

Die Mehrspannungsbatterievorrichtung MB wird als eine so genannte AES Batterie, also eine 48 Volt Batterie mit einem 12 Volt Abgriff und einem Gleichspannungswandler GW gebaut.

Die Mehrspannungsbatterievorrichtung MB umfasst stromausgangsseitig einen ersten Ausgangsstromanschluss AA1 und einen Massestromanschluss MA, über die die Mehrspannungsbatterievorrichtung MB an dem ersten Bordnetzzweig BZ1 elektrisch angeschlossen ist. Die Mehrspannungsbatterievorrichtung MB stellt als eine erste Nennspannung (bzw. Nennausgangsspannung) die erste Bordnetzspannung U1, die zwischen dem ersten Ausgangsstromanschluss AA1 und dem Massestromanschluss MA anliegt.

Die Mehrspannungsbatterievorrichtung MB umfasst stromausgangsseitig ferner einen zweiten Ausgangsstromanschluss AA2 und ist über den zweiten Ausgangsstromanschluss AA2 und den Massestromanschluss MA an dem zweiten Bordnetzzweig BZ2 elektrisch angeschlossen. Die Mehrspannungsbatterievorrichtung MB stellt als eine zweite Nennspannung (bzw. Nennausgangsspannung) die zweite Bordnetzspannung U2, die zwischen dem zweiten Ausgangsstromanschluss AA2 und dem Massestromanschluss MA anliegt.

Die Mehrspannungsbatterievorrichtung MB umfasst zwischen dem ersten Ausgangsstromanschluss AA1 und dem Massestromanschluss MA eine erste Serienschaltung SS1 von einer ersten Batteriezellengruppe ZG1, einer ersten Schmelzsicherung FS1 sowie einem ersten steuerbaren Schalter ST1, der aus einem entsprechenden allgemein bekannten Relais ausgebildet ist. Die erste Serienschaltung SS1 mit der ersten Batteriezellengruppe ZG1 bildet somit eine erste Strom-/Spannungsquelle für den ersten Bordnetzzweig BZ1. Die erste Batteriezellengruppe ZG1 weist eine Nennspannung in Höhe von 12 Volt auf und stellt somit die erste Bordnetzspannung U1 bereit. Dabei ist die erste Batteriezellengruppe ZG1 über ihren Pluspol PP1 mit dem ersten Ausgangsstromanschluss AA1 und über ihren Minuspol NP1 (und weiter über die erste Schmelzsicherung FS1 und den ersten Schalter ST1) mit dem Massestromanschluss MA elektrisch verbunden. Der erste Schalter ST1 weist zwei Anschlüsse SA1, SA2 auf, die in der ersten Serienschaltung SS1 seriell elektrisch angeschlossen sind.

Die Mehrspannungsbatterievorrichtung MB umfasst ferner einen Strompfad SP zwischen den beiden Anschlüssen SA1, SA2 des ersten Schalters ST1, der sich somit parallel zu dem Schalter ST1 erstreckt. Der Strompfad SP umfasst einen Schutzwiderstand R und einen zweiten steuerbaren Schalter ST2, die zueinander in Serie elektrisch angeschlossen sind. Dabei ist der Schutzwiderstand R als ein PTC-Widerstand ausgebildet. Der zweite Schalter ST2 ist wie der erste Schalter ST1 aus einem entsprechenden allgemein bekannten Relais ausgebildet. In einem geschlossen Schaltzustand ermöglicht der zweite Schalter ST2 einen Stromfluss durch den Strompfad SP und über den Schutzwiderstand R. In einem offenen Schaltzustand unterbricht der zweite Schalter ST2 den Stromfluss durch den Strompfad SP.

In einem geschlossenen Schaltzustand schließt der erste Schalter ST1 seine beiden Anschlüsse SA1, SA2 miteinander elektrisch kurz und überbrückt somit den Strompfad SP mit dem Schutzwiderstand R. In einem offenen Schaltzustand unterbricht der erste Schalter ST1 den direkten Stromfluss zwischen den beiden Anschlüssen SA1, SA2 und ermöglicht somit einen Stromfluss über den Strompfad SP und somit über den Schutzwiderstand R.

Die Mehrspannungsbatterievorrichtung MB umfasst zwischen dem ersten Ausgangsstromanschluss AA1 und dem zweiten Ausgangsstromanschluss AA2 eine zweite Serienschaltung SS2 von einer zweiten Schmelzsicherung FS2, einer zweiten Batteriezellengruppe ZG2, sowie einem dritten steuerbaren Schalter ST3, der wie die beiden vorgenannten Schalter ST1, ST2 aus einem entsprechenden allgemein bekannten Relais ausgebildet ist. Dabei ist die zweite Batteriezellengruppe ZG2 über ihren Pluspol PP2 (und weiter über den Schalter ST und die zweite Schmelzsicherung FS2) mit dem zweiten Ausgangsstromanschluss AA2 und über ihren Minuspol NP2 mit dem ersten Ausgangsstromanschluss AA1 elektrisch verbunden.

Zwischen dem zweiten Ausgangsstromanschluss AA2 und dem Massestromanschluss MA bilden die erste und die zweite Serienschaltungen SS1, SS2 somit eine größere Serienschaltung von den beiden Batteriezellengruppen ZG1, ZG2, den beiden Schmelzsicherungen FS1, FS2 sowie den ersten und den dritten Schalter ST1, ST3, wobei die beiden Batteriezellengruppen ZG1, ZG2 über den dritten Schalter ST3 zueinander schaltbar in Serie geschaltet sind.

Die zweite Serienschaltung SS2 mit der zweiten Batteriezellengruppe ZG2 bildet mit der ersten Serienschaltung samt der ersten Batteriezellengruppe ZG1 in Serie eine zweite Strom-/Spannungsquelle für den zweiten Bordnetzzweig BZ2. Die zweite Batteriezellengruppe ZG2 weist dabei eine Nennspannung in Höhe von 36 Volt auf und stellt mit der in Serie geschalteten ersten Batteriezellengruppe ZG1 mit der Nennspannung von 12 Volt die zweite Bordnetzspannung U2 von 48 Volt bereit.

Dabei sind die beiden Batteriezellengruppen ZG1, ZG2 aus Li-Ionen Zellen ausgebaut.

Die Mehrspannungsbatterievorrichtung MB umfasst außerdem einen bidirektionalen Gleichspannungswandler GW, der eingangsspannungsseitig zwischen dem ersten Ausgangsstromanschluss AA1 und der ersten Batteriezellengruppe ZG1, sowie ausgangsspannungsseitig zwischen dem zweiten Ausgangsstromanschluss AA2 und der zweiten Batteriezellengruppe ZG2 elektrisch angeschlossen ist. Der Gleichspannungswandler GW ist eingerichtet, bei Bedarf die zweite Batteriezellengruppe ZG2 mit Strom der ersten Batteriezellengruppe ZG1 und/oder die erste Batteriezellengruppe ZG1 mit Strom der zweiten Batteriezellengruppe ZG2 aufzuladen.

Die Mehrspannungsbatterievorrichtung MB umfasst zudem eine Batteriemanagementanordnung BM zum Betreiben bzw. zum Steuern oder zum Regeln der Mehrspannungsbatterievorrichtung MB. Die Batteriemanagementanordnung BM ist über ihre Versorgungsstromanschlüsse VA1, VA2 zwischen dem ersten Ausgangsstromanschluss AA1 und dem Massestromanschluss MA und somit parallel zur ersten Serienschaltung SS1 elektrisch angeschlossen. Damit wird die Batteriemanagementanordnung BM von der ersten Batteriezellengruppe ZG1 mit Strom versorgt (sofern sich der erste und der zweite Schalter ST1, ST2 in dem geschlossenen Schaltzustand befinden).

Die Batteriemanagementanordnung BM ist signaleingangsseitig über zwei Messsignalanschlüsse MA1, MA2 mit den beiden Batteriezellengruppen ZG1, ZG2 messtechnisch verbunden und überwacht über diese Messsignalanschlüsse MA1, MA2 in einer dem Fachmann bekannten Weise Zellenspannungen, Ladezustände (auf Englisch "State of Charge, SoC"), Alterungszustände (auf Englisch "State of Health, SoH") und sonstige Eigenschaften, wie z. B. Zellentemperaturen, der beiden Batteriezellengruppen ZG1, ZG2. Ferner ist die Batteriemanagementanordnung BM signaleingangsseitig über einen Datensignalanschluss DA mit einer externen Strommesseinheit im ersten Bordnetzzweig BZ1 signaltechnisch verbunden. Die Strommesseinheit erfasst in einer dem Fachmann bekannten Weise überhöhte Bordnetzströme bzw. elektrische Kurzschlüsse im ersten Bordnetzzweig BZ1 und gibt der Batteriemanagementanordnung BM Informationen über überhöhte Bordnetzströme bzw. elektrische Kurzschlüsse im ersten Bordnetzzweig BZ1 ab.

Signalausgangsseitig ist die Batteriemanagementanordnung BM über vier Steuersignalanschlüsse AS1, AS2, AS3, AS4 mit dem Gleichspannungswandler GW und den drei Schaltern ST1, ST2, ST3 bzw. mit jeweiligen Steuersignalanschlüssen dieser vier Schaltungskomponenten signaltechnisch verbunden und steuert bzw. regelt diese Schaltungskomponenten.

Die Batteriemanagementanordnung BM ist eingerichtet, in einer dem Fachmann bekannten Weise Ladezustände der beiden Batteriezellengruppen ZG1, ZG2 zu überwachen und bei kritischen Ladezuständen der jeweiligen Batteriezellengruppen ZG1, ZG2 den Gleichspannungswandler GW und die drei Schalter ST1, ST2, ST3 derart zu steuern oder zu regeln, sodass die beiden Batteriezellengruppen ZG1, ZG2 jeweils mit dem Strom von der jeweils anderen Batteriezellengruppe ZG1, ZG2 aufgeladen werden und somit vor Beschädigungen durch Tiefentladung geschützt werden.

Die Batteriemanagementanordnung BM ist ferner eingerichtet, im Falle, dass diese von der Strommesseinheit über einen überhöhten Bordnetzstrom bzw. einen elektrischen Kurzschluss im ersten Bordnetzzweig BZ1 erfährt, den ersten Schalter ST1 in den offenen Schaltzustand zu schalten und zugleich den zweiten Schalter ST2 in den geschlossenen Schaltzustand zu schalten, wodurch die Stromverbindung zwischen der ersten Batteriezellengruppe ZG1 und dem ersten Bordnetzzweig BZ1 durch den Schutzwiderstand R verläuft. Der Schutzwiderstand R begrenzt den Entladestrom der ersten Batteriezellengruppe ZG1 und schützt somit die erste Batteriezellengruppe ZG1 vor einer Überlastung. Dabei steigt der Widerstandswert des (als PTC-Widerstand ausgebildeten) Schutzwiderstands R mit dem steigenden Stromwert des durch die erste Serienschaltung SS1 fließenden Entladestromes infolge der mit dem steigenden Stromwert aufsteigenden Temperatur am Schutzwiderstand R. Dadurch steigt auch die strombegrenzende Wirkung des Schutzwiderstands R mit dem steigenden Stromwert des Entladestromes.

Darüber hinaus überwacht die Batteriemanagementanordnung BM anhand von gemessenen Zellenspannungen und/oder Zellentemperaturen interne Störungen, wie z. B. interne elektrische Kurzschlüsse, bei den Batteriezellen der ersten Batteriezellengruppe ZG1. Beim Vorliegen einer internen Störung schaltet die Batteriemanagementanordnung BM den ersten und den zweiten Schalter ST1, ST2 in den offenen Schaltzustand. Dadurch wird die elektrische Verbindung zwischen der ersten Batteriezellengruppe ZG1 und dem ersten Bordnetzzweig BZ1 unterbrochen.

Wird das Kraftfahrzeug nach Ende eines Fahrbetriebs abgestellt und geht in ein Ruhemodus, so werden nur sicherheitsrelevante und sonstige relevante Funktionen des Fahrzeugs weiterhin durchgeführt. Entsprechend verbrauchen elektrische Systeme bzw. Komponenten, wie z. B. Sensoren, Bussysteme und Steuergeräte, die diese relevanten Funktionen durchführen, weiterhin Strom.

In der Regel weisen diese Systeme bzw. Komponenten eine Nennspannung von 12 Volt (12 Volt Verbraucher) auf und sind daher in dem ersten Bordnetzzweig BZ1 angeschlossen und werden folglich von der ersten Batteriezellengruppe ZG1 - auch während des Ruhemodus des Fahrzeugs - mit Strom versorgt.

Um die Stromversorgung über eine möglichst lange Zeitdauer aufrechterhalten zu können bzw. eine Tiefentladung bei den Batteriezellen der ersten Batteriezellengruppe ZG1 zu vermeiden, sollte der Stromverbrauch während des Ruhemodus möglichst niedrig gehalten werden.

Hierzu schaltet die Batteriemanagementanordnung BM den ersten Schalter ST1 in den offenen Schaltzustand und zugleich den zweiten Schalter ST2 in den geschlossenen Schaltzustand, und zwar unabhängig davon, ob in dem ersten Bordnetzzweig BZ1 ein überhöhter Bordnetzstrom bzw. ein elektrischer Kurzschluss vorliegt, und schützt somit die erste Batteriezellengruppe ZG1 über die gesamten Dauer des Ruhemodus vorsorglich vor überhöhten Entladeströmen.

In diesem Fall ist es für die Batteriemanagementanordnung BM nicht mehr erforderlich, währen des Ruhemodus den Stromwert im ersten Bordnetzzweig BZ1 zu überwachen. Dies reduziert den Strombedarf der Batteriemanagementanordnung BM, wodurch wiederum weniger Strom von der ersten Batteriezellengruppe ZG1 abgenommen wird.

Der Stromverlust an dem Schutzwiderstand R ist vergleichsweise gering aufgrund des an sich niedrigen Entladestromes der ersten Batteriezellengruppe ZG1 und der Tatsache, dass der Schutzwiderstand R als PTC-Widerstand beim geringen Entladestrom und somit bei einer niedrigen Eigentemperatur einen geringen Widerstandswert aufweist.

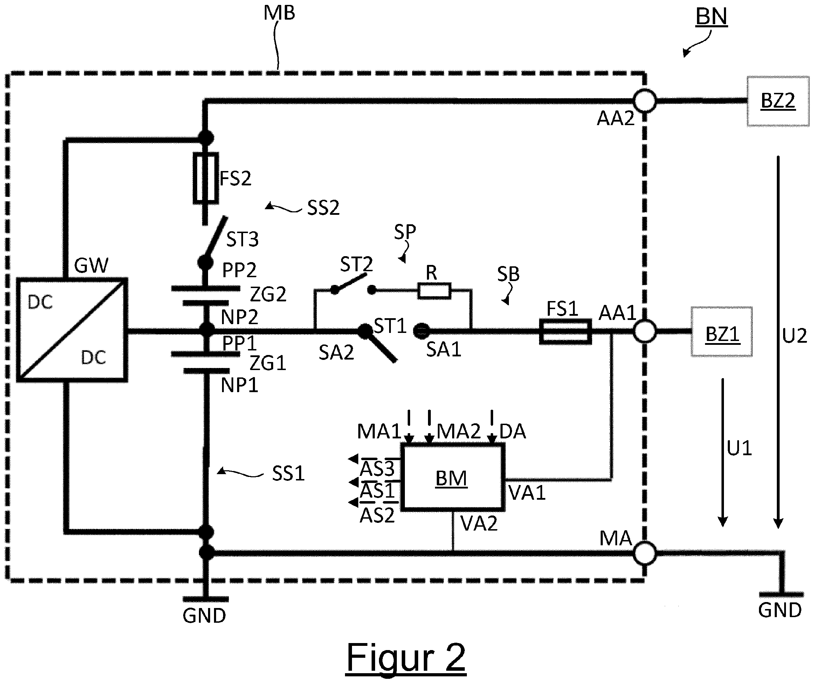

Das Bordnetz BN in Figur 2 unterscheidet sich von dem in Figur 1 dargestellten Bordnetz dadurch, dass die erste Schmelzsicherung FS1 und der erste Schalter ST1 sowie der Strompfad SP mit dem Schutzwiderstand R und dem zweiten Schalter ST2 nicht zwischen der ersten Batteriezellengruppe ZG1 und dem Massestromanschluss MA, sondern zwischen dem ersten Ausgangsstromanschluss AA1 einerseits und der ersten und der zweiten Batteriezellengruppe ZG1, ZG2 anderseits elektrisch angeschlossen sind. Damit sind die erste Schmelzsicherung FS1, der erste Schalter ST1 und der Strompfad SP mit dem Schutzwiderstand R und dem zweiten Schalter ST2 in einem gemeinsamen Schaltungsabschnitt SB der ersten und der zweiten Serienschaltung SS1, SS2 elektrisch angeschlossen, der den ersten Ausgangsstromanschluss AA1 mit der ersten und der zweiten Batteriezellengruppe ZG1, ZG2 elektrisch verbindet.

Dabei ist der erste Schalter ST1 über dessen beiden Anschlüsse SA1, SA2 in dem gemeinsamen Schaltungsabschnitt SB elektrisch verbunden. Der Strompfad SP mit dem Schutzwiderstand R und dem zweiten Schalter ST2 ist dann zwischen den beiden Anschlüsse SA1, SA2 des ersten Schalters ST1 und parallel zu dem erste Schalter ST1 elektrisch angeschlossen.

## Patentansprüche

1. Mehrspannungsbatterievorrichtung (MB) für ein Kraftfahrzeug, umfassend:
- einen ersten Ausgangsstromanschluss (AA1) und einen Massestromanschluss (MA) zum Bereitstellen einer ersten Nennspannung (U1);
- einen zweiten Ausgangsstromanschluss (AA2) und den Massestromanschluss (MA) zum Bereitstellen einer zweiten Nennspannung (U2);
- eine erste Serienschaltung (SS1) von einer ersten Batteriezellengruppe (ZG1) und einem ersten steuerbaren Schalter (ST1) zwischen dem ersten Ausgangsstromanschluss (AA1) und dem Massestromanschluss (MA), wobei der erste Schalter (ST1) über zwei Anschlüsse (SA1, SA2) in der ersten Serienschaltung (SS1) elektrisch angeschlossen ist;
- eine zweite Batteriezellengruppe (ZG2), die zwischen dem zweiten Ausgangsstromanschluss (AA2) und dem ersten Ausgangsstromanschluss (AA1) elektrisch angeschlossen ist und mit der ersten Batteriezellengruppe (ZG1) schaltbar in Serie angeschlossen ist;
- eine Batteriemanagementanordnung (BM) zum Betreiben der Mehrspannungsbatterievorrichtung (MB),
wobei die Mehrspannungsbatterievorrichtung (MB) ferner aufweist:
- einen Schutzwiderstand (R), der zwischen den beiden Anschlüssen (SA1, SA2) des ersten Schalters (ST1) und somit parallel zu dem ersten Schalter (ST1) elektrisch angeschlossen ist;
- wobei der erste Schalter (ST1) eingerichtet ist, in einem geschlossenen Schaltzustand den Schutzwiderstand (R) zu überbrücken;
- wobei die Batteriemanagementanordnung (BM) eingerichtet ist, im Falle eines zu hohen Stromes oder eines elektrischen Kurzschlusses zwischen dem ersten Ausgangsstromanschluss (AA1) und dem Massestromanschluss (MA) zum Schutz der ersten Batteriezellengruppe (ZG1) den ersten Schalter (ST1) in einen offenen Schaltzustand zu schalten;
- einen zweiten Schalter (ST2), der zwischen den beiden Anschlüssen (SA1, SA2) des ersten Schalters (ST1) und in Serie zu dem Schutzwiderstand (R) elektrisch angeschlossen ist;
- wobei die Batteriemanagementanordnung (BM) ferner eingerichtet ist, im Falle des zu hohen Stromes oder des elektrischen Kurzschlusses zwischen dem ersten Ausgangsstromanschluss (AA1) und dem Massestromanschluss (MA) den zweiten Schalter (ST2) in einen geschlossenen Schaltzustand zu schalten;
- wobei die Batteriemanagementanordnung (BM) ferner eingerichtet ist, im Falle, dass das Kraftfahrzeug sich in einem Ruhemodus, also nicht im Fahrbetrieb oder in einem sonstigen aktiven Betrieb, befindet, den ersten Schalter (ST1) in den offenen Schaltzustand zu schalten und den zweiten Schalter (ST2) in den geschlossenen Schaltzustand zu schalten.

2. Mehrspannungsbatterievorrichtung (MB) nach Anspruch 1, wobei die Batteriemanagementanordnung (BM) ferner eingerichtet ist, im Falle einer internen Störung oder eines internen elektrischen Kurzschlusses in der ersten Batteriezellengruppe (ZG1) den ersten (ST1) und den zweiten (ST2) Schalter in den offenen Schaltzustand zu schalten.

3. Mehrspannungsbatterievorrichtung (MB) nach einem der Ansprüche 1 bis 2, wobei die Batteriemanagementanordnung (BM) ferner eingerichtet ist, bei einem kritischen Ladezustand der ersten Batteriezellengruppe (ZG1) den ersten (ST1) und den zweiten (ST2) Schalter in den offenen Schaltzustand zu schalten.

4. Mehrspannungsbatterievorrichtung (MB) nach einem der vorangehenden Ansprüche, wobei die Batteriemanagementanordnung (BM) über Versorgungsstromanschlüsse (VA1, VA2) zwischen dem ersten Ausgangsstromanschluss (AA1) und dem Massestromanschluss (MA), und parallel zur ersten Serienschaltung (SS1) elektrisch angeschlossen ist.

5. Mehrspannungsbatterievorrichtung (MB) nach einem der vorangehenden Ansprüche, wobei der Schutzwiderstand (R) als ein PTC-Widerstand ausgebildet ist.

6. Mehrspannungsbatterievorrichtung (MB) nach einem der vorangehenden Ansprüche, ferner umfassend:
- einen uni- oder bidirektionalen Gleichspannungswandler (GW), der eingangsspannungsseitig zwischen dem ersten Ausgangsstromanschluss (AA1) und der ersten Batteriezellengruppe (ZG1) und ausgangsspannungsseitig zwischen dem zweiten Ausgangsstromanschluss (AA2) und der zweiten Batteriezellengruppe (ZG2) elektrisch angeschlossen ist und eingerichtet ist, mit Strom der ersten Batteriezellengruppe (ZG1) die zweite Batteriezellengruppe (ZG2) und/oder mit Strom der zweiten Batteriezellengruppe (ZG2) die erste Batteriezellengruppe (ZG1) aufzuladen;
- wobei die Batteriemanagementanordnung (BM) ferner eingerichtet ist, den Gleichspannungswandler (GW) zum Aufladen der ersten Batteriezellengruppe (ZG1) mit dem Strom der zweiten Batteriezellengruppe (ZG2) und/oder zum Aufladen der zweiten Batteriezellengruppe (ZG2) mit dem Strom der ersten Batteriezellengruppe (ZG1) zu betreiben.

7. Mehrspannungsbatterievorrichtung (MB) nach einem der vorangehenden Ansprüche, ferner umfassend:
- eine zweite Serienschaltung (SS2) von einem dritten steuerbaren Schalter (ST3) und der zweiten Batteriezellengruppe (ZG2) zwischen dem zweiten Ausgangsstromanschluss (AA2) und dem ersten Ausgangsstromanschluss (AA1);
- wobei der dritte Schalter (ST3) die zweite Batteriezellengruppe (ZG2) mit der ersten Batteriezellengruppe (ZG1) schaltbar elektrisch verbindet.

8. Mehrspannungsbatterievorrichtung (MB) nach Anspruch 7,
- wobei die erste (SS1) und die zweite (SS2) Serienschaltung einen gemeinsamen Schaltungsabschnitt (SB) aufweisen, der den ersten Ausgangsstromanschluss (AA1) mit der ersten (ZG1) und der zweiten (ZG2) Batteriezellengruppe elektrisch verbindet;
- wobei der erste Schalter (ST1) bzw. dessen beide Anschlüsse (SA1, SA2) in dem Schaltungsabschnitt (SB) elektrisch angeschlossen sind.

9. Bordnetz (BN) für ein Kraftfahrzeug, umfassend:
- einen ersten Bordnetzzweig (BZ1) mit einer ersten Bordnetzspannung (U1);
- einen zweiten Bordnetzzweig (BZ2) mit einer zweiten Bordnetzspannung (U2);
- eine Mehrspannungsbatterievorrichtung (MB) nach einem der vorangehenden Ansprüche, die über den ersten Ausgangsstromanschluss (AA1) am ersten Bordnetzzweig (BZ1) und über den zweiten Ausgangsstromanschluss (AA2) am zweiten Bordnetzzweig (BZ2) elektrisch angeschlossen ist.

## Claims

1. Multi-voltage battery device (MB) for a motor vehicle, comprising:
- a first electrical output terminal (AA1) and an electrical earth terminal (MA) for the provision of a first rated voltage (U1);
- a second electrical output terminal (AA2) and the electrical earth terminal (MA) for the provision of a second rated voltage (U2);
- a first series circuit (SS1) of a first battery cell group (ZG1) and a first controllable switch (ST1) between the first electrical output terminal (AA1) and the electrical earth terminal (MA), wherein the first switch (ST1) is electrically connected into the first series circuit (SS1) via two terminals (SA1, SA2);
- a second battery cell group (ZG2), that is electrically connected between the second electrical output terminal (AA2) and the first electrical output terminal (AA1), and is connected switchably in series with the first battery cell group (ZG1);
- a battery management assembly (BM) for operating the multi-voltage battery device (MB),
wherein the multi-voltage battery device (MB) also has:
- a protective resistor (R) that is electrically connected between the two terminals (SA1, SA2) of the first switch (ST1), and thus parallel to the first switch (ST1);
- wherein the first switch (ST1) is configured to bridge the protective resistor (R) when in a closed switch state;
- wherein the battery management assembly (BM) is configured to switch the first switch (ST1) into an open switch state to protect the first battery cell group (ZG1) in the event of an excessively high current or of an electrical short circuit between the first electrical output terminal (AA1) and the electrical earth terminal (MA);
- a second switch (ST2) that is electrically connected between the two terminals (SA1, SA2) of the first switch (ST1), and in series with the protective resistor (R);
- wherein the battery management assembly (BM) is further configured to switch the second switch (ST2) into a closed switch state in the event of the excessively high current or of the electrical short circuit between the first electrical output terminal (AA1) and the electrical earth terminal (MA);
- wherein the battery management assembly (BM) is further configured to switch the first switch (ST1) into the open switch state and to switch the second switch (ST2) into the closed switch state in the event that the motor vehicle is in an idle mode, that is to say is not in the driving mode or in another active mode.

2. Multi-voltage battery device (MB) according to Claim 1, wherein the battery management assembly (BM) is further configured to switch the first (ST1) and the second (ST2) switches into the open switch state in the event of an internal malfunction or an internal electrical short circuit in the first battery cell group (ZG1).

3. Multi-voltage battery device (MB) according to one of Claims 1 to 2, wherein the battery management assembly (BM) is further configured to switch the first (ST1) and the second (ST2) switches into the open switch state in the event of a critical charge state of the first battery cell group (ZG1).

4. Multi-voltage battery device (MB) according to one of the preceding claims, wherein the battery management assembly (BM) is electrically connected via electrical supply connections (VA1, VA2) between the first electrical output terminal (AA1) and the electrical earth terminal (MA), and parallel to the first series circuit (SS1).

5. Multi-voltage battery device (MB) according to one of the preceding claims, wherein the protective resistor (R) is implemented as a PTC resistor.

6. Multi-voltage battery device (MB) according to one of the preceding claims, further comprising:
- a unidirectional or bidirectional DC voltage converter (GW) that is electrically connected on the input voltage side between the first electrical output terminal (AA1) and the first battery cell group (ZG1) and on the output voltage side between the second electrical output terminal (AA2) and the second battery cell group (ZG2), and which is configured to charge the second battery cell group (ZG2) with current of the first battery cell group (ZG1) and/or the first battery cell group (ZG1) with current of the second battery cell group (ZG2);
- wherein the battery management assembly (BM) is further configured to operate the DC voltage converter (GW) to charge the first battery cell group (ZG1) with the current of the second battery cell group (ZG2) and/or to charge the second battery cell group (ZG2) with the current of the first battery cell group (ZG1).

7. Multi-voltage battery device (MB) according to one of the preceding claims, further comprising:
- a second series circuit (SS2) consisting of a third controllable switch (ST3) and the second battery cell group (ZG2) between the second electrical output terminal (AA2) and the first electrical output terminal (AA1);
- wherein the third switch (ST3) connects the second battery cell group (ZG2) to the first battery cell group (ZG1) in an electrically switchable manner.

8. Multi-voltage battery device (MB) according to Claim 7,
- wherein the first (SS1) and the second (SS2) series circuits comprise a common circuit segment (SB) that electrically connects the first electrical output terminal (AA1) to the first (ZG1) and the second (ZG2) battery cell groups;
- wherein the first switch (ST1), or its two terminals (SA1, SA2) are electrically connected into the circuit segment (SB).

9. On-board electrical system (BN) for a motor vehicle, comprising:
- a first on-board electrical system branch (BZ1) with a first on-board electrical system voltage (U1);
- a second on-board electrical system branch (BZ2) with a second on-board electrical system voltage (U2);
- a multi-voltage battery device (MB) according to one of the preceding claims, that is electrically connected via the first electrical output terminal (AA1) to the first on-board electrical system branch (BZ1) and via the second electrical output terminal (AA2) to the second on-board electrical system branch (BZ2).

## Revendications

1. Dispositif de batterie multi-tension (MB) pour un véhicule automobile, comprenant :
- une première borne de courant de sortie (AA1) et une borne de courant de masse (MA) pour fournir une première tension nominale (U1) ;
- une deuxième borne de courant de sortie (AA2) et la borne de courant de masse (MA) pour fournir une deuxième tension nominale (U2) ;
- une première connexion série (SS1) d'un premier groupe de cellules de batterie (ZG1) et un premier commutateur (ST1) pouvant être commandé, entre la première borne de courant de sortie (AA1) et la borne de courant de masse (MA), dans lequel le premier commutateur (ST1) est connecté électriquement par deux bornes (SA1, SA2) dans la première connexion série (SS1) ;
- un deuxième groupe de cellules de batterie (ZG2) qui est connecté électriquement entre la deuxième borne de courant de sortie (AA2) et la première borne de courant de sortie (AA1) et est connecté en série de manière commutable avec le premier groupe de cellules de batterie (ZG1) ;
- un agencement de gestion de batterie (BM) pour faire fonctionner le dispositif de batterie multi-tension (MB), le dispositif de batterie multi-tension (MB) présentant en outre :
- une résistance de protection (R) qui est connectée électriquement entre les deux bornes (SA1, SA2) du premier commutateur (ST1) et est donc connecté en parallèle au premier commutateur (ST1) ;
- dans lequel le premier commutateur (ST1) est conçu pour shunter la résistance de protection (R) dans un état de commutation fermé ;
- dans lequel, en cas de courant trop élevé ou de court-circuit électrique entre la première borne de courant de sortie (AA1) et la borne de courant de masse (MA), l'agencement de gestion de batterie (BM) est conçu pour commuter le premier commutateur (ST1) dans un état de commutation ouvert pour la protection du premier groupe de cellules de batterie (ZG1) ;
- un deuxième commutateur (ST2) qui est connecté électriquement entre les deux bornes (SA1, SA2) du premier commutateur (ST1) et est connecté en série avec la résistance de protection (R) ;
- dans lequel, en cas de courant trop élevé ou de court-circuit électrique entre la première borne de courant de sortie (AA1) et la borne de courant de masse (MA), l'agencement de gestion de batterie (BM) est en outre conçu pour commuter le deuxième commutateur (ST2) dans un état de commutation fermé ;
- dans lequel, au cas où le véhicule automobile se trouverait dans un mode de repos, donc ne se trouverait pas dans le mode de conduite ou dans un autre mode actif, l'agencement de gestion de batterie (BM) est en outre conçu pour commuter le premier commutateur (ST1) dans l'état de commutation ouvert et pour commuter le deuxième commutateur (ST2) dans l'état de commutation fermé.

2. Dispositif de batterie multi-tension (MB) selon la revendication 1, dans lequel, en cas de panne interne ou d'un court-circuit électrique interne dans le premier groupe de cellules de batterie (ZG1), l'agencement de gestion de batterie (BM) est en outre conçu pour commuter le premier commutateur (ST1) et le deuxième (ST2) commutateur dans l'état de commutation ouvert.

3. Dispositif de batterie multi-tension (MB) selon l'une quelconque des revendications 1 à 2, dans lequel, en cas d'état de charge critique du premier groupe de cellules de batterie (ZG1), l'agencement de gestion de batterie (BM) est en outre conçu pour commuter le premier commutateur (ST1) et le deuxième commutateur (ST2) dans l'état de commutation ouvert.

4. Dispositif de batterie multi-tension (MB) selon l'une quelconque des revendications précédentes, dans lequel l'agencement de gestion de batterie (BM) est connecté électriquement par des bornes de courant d'alimentation (VA1, VA2) entre la première borne de courant de sortie (AA1) et la borne de courant de masse (MA), et est connecté en parallèle à la première connexion série (SS1).

5. Dispositif de batterie multi-tension (MB) selon l'une quelconque des revendications précédentes, dans lequel la résistance de protection (R) est réalisée comme une résistance PTC.

6. Dispositif de batterie multi-tension (MB) selon l'une quelconque des revendications précédentes, comprenant en outre :
- un convertisseur continu-continu unidirectionnel ou bidirectionnel (GW) qui est connecté électriquement côté tension d'entrée entre la première borne de courant de sortie (AA1) et le premier groupe de cellules de batterie (ZG1) et côté tension de sortie entre la deuxième borne de courant de sortie (AA2) et le deuxième groupe de cellules de batterie (ZG2), et est conçu pour recharger le deuxième groupe de cellules de batterie (ZG2) avec le courant du premier groupe de cellules de batterie (ZG1) et/ou pour recharger le premier groupe de cellules de batterie (ZG1) avec le courant du deuxième groupe de cellules de batterie (ZG2) ;
- dans lequel l'agencement de gestion de batterie (BM) est en outre conçu pour faire fonctionner le convertisseur continu-continu (GW) pour recharger le premier groupe de cellules de batterie (ZG1) avec le courant du deuxième groupe de cellules de batterie (ZG2) et/ou pour recharger le deuxième groupe de cellules de batterie (ZG2) avec le courant du premier groupe de cellules de batterie (ZG1).

7. Dispositif de batterie multi-tension (MB) selon l'une quelconque des revendications précédentes, comprenant en outre :
- une deuxième connexion série (SS2) d'un troisième commutateur (ST3) pouvant être commandé et du deuxième groupe de cellules de batterie (ZG2) entre la deuxième borne de courant de sortie (AA2) et la première borne de courant de sortie (AA1) ;
- dans lequel le troisième commutateur (ST3) relie électriquement de manière commutable le deuxième groupe de cellules de batterie (ZG2) au premier groupe de cellules de batterie (ZG1).

8. Dispositif de batterie multi-tension (MB) selon la revendication 7,
- dans lequel la première (SS1) et la deuxième (SS2) connexion série présentent une section de commutation commune (SB) qui relie électriquement la première borne de courant de sortie (AA1) au premier (ZG1) et au deuxième (ZG2) groupe de cellules de batterie ;
- dans lequel le premier commutateur (ST1) ou ses deux bornes (SA1, SA2) sont connectés électriquement dans la section de commutation (SB).

9. Réseau de bord (BN) pour un véhicule automobile, comprenant :
- une première branche de réseau de bord (BZ1) ayant une première tension de réseau de bord (U1) ;
- une deuxième branche de réseau de bord (BZ2) ayant une deuxième tension de bord (U2) ;
- un dispositif de batterie multi-tension (MB) selon l'une quelconque des revendications précédentes qui est connecté électriquement par la première borne de courant de sortie (AA1) au niveau de la première branche de réseau de bord (BZ1) et par la deuxième borne de courant de sortie (AA2) au niveau de la deuxième branche de réseau de bord (BZ2).
